# EUROPÄISCHE PATENTSCHRIFT

(11) **EP 3 268 671 B1**
(45) Veröffentlichungstag und Bekanntmachung des Hinweises auf die Patenterteilung: **06.11.2019**
(21) Anmeldenummer: 16710914.9
(22) Anmeldetag: 04.03.2016
(51) Int. Cl.: F24D 3/14, F16L 11/12, F16L 11/04

(54) **ROHRBUND EINES KUNSTSTOFFROHRES SOWIE MINDESTENS EINEN VON EINEM DERARTIGEN ROHRBUND ABGEWICKELTEN ABSCHNITT EINES KUNSTSTOFFROHRES UMFASSENDES FLÄCHENTEMPERIERUNGSELEMENT**
TUBE BUNDLE OF A PLASTIC TUBE AND SURFACE TEMPERATURE-CONTROL ELEMENT COMPRISING AT LEAST ONE SEGMENT OF A PLASTIC TUBE UNWOUND FROM SUCH A TUBE BUNDLE
COLLET TUBULAIRE D'UN TUYAU EN PLASTIQUE ET ÉLÉMENT DE RÉGULATION DE TEMPÉRATURE DE SURFACES COMPRENANT UN TRONÇON, DÉROULÉ D'UN COLLET TUBULAIRE DE CE TYPE, D'UN TUYAU EN PLASTIQUE

(30) Priorität: 09.03.2015 DE 202015101160 U
(43) Veröffentlichungstag der Anmeldung: 17.01.2018
(73) Patentinhaber: REHAU AG + Co, 95111 Rehau (DE)
(72) Erfinder: SCHMITT, Horst, 91058 Erlangen (DE); BURKHARDT, Oliver, 91080 Uttenreuth (DE); VOHLER, Tobias, 92318 Neumarkt (DE)
(86) Internationale Anmeldenummer: PCT/EP2016/000382
(87) Internationale Veröffentlichungsnummer: WO 2016/142046

(56) Entgegenhaltungen:
- EP-A1- 0 346 529
- DE-U1- 9 011 611
- DE-U1-202009 016 478
- DE-U1-202010 009 133
- US-A1- 2008 105 321

## Beschreibung

Die vorliegende Erfindung betrifft einen Rohrbund eines Kunststoffrohres, insbesondere zur Verwendung in einem Flächentemperierungssystem, mit einem ersten Ende des Kunststoffrohres und einem davon beabstandeten zweiten Ende des Kunststoffrohres, wobei das Kunststoffrohr eine ein Lumen des Kunststoffrohres umgebende Rohrwandung, die zumindest teilweise aus polymerem Material aufgebaut, und eine auf die dem Lumen abgewandte Außenseite des Kunststoffrohres aufgebrachte Rohrsignierung umfasst, wobei die Rohrsignierung eine Längenangabe umfasst, die den Abstand der Stelle des Kunststoffrohres angibt, auf dem der jeweilige Abschnitt der Rohrsignierung aufgebracht ist, vom ersten Ende des Kunststoffrohres entfernt ist.

Flächentemperierungssysteme und darin einsetzbare Kunststoffrohre sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Kunststoffrohre zur Verwendung in solchen Flächentemperierungssystemen sollten über eine gewisse Flexibilität verfügen, weil Kunststoffrohre in einem Flächentemperierungssystem, z. B. in einer Fußbodenheizung, auch in Bögen verlegt werden. Diese Flexibilität ermöglicht es andererseits auch, Kunststoffrohre für Flächentemperierungssysteme, bei denen es sich gebräuchlicherweise um Mehrschichtverbundrohre mit einer Sauerstoffsperrschicht handelt, zu einem Rohrbund aufzuwickeln, was üblicherweise unmittelbar nach dem Extrudieren des Kunststoffrohres erfolgt. Auf diese Weise wird der Transport der Kunststoffrohre für Flächentemperierungssysteme vereinfacht. Eine gebräuchliche Länge eines zu einem Rohrbund aufgewickelten Kunststoffrohres für Flächentemperierungssysteme beträgt beispielsweise 500 m.

Herkömmlicherweise wird auf übliche Kunststoffrohre für Flächentemperierungssysteme eine Rohrsignierung aufgebracht, in der neben einer Firmenbezeichnung des Herstellers sowie der Artikelbezeichnung des Kunststoffrohres auch eine Längenangabe angegeben ist, die den Abstand der Rohrsignierung von einem Ende des Kunststoffrohres auf dem betreffenden Rohrbund angibt. Auf diese Weise kann der Fachmann beim Verlegen des Kunststoffrohres leicht erkennen, welche Rohrlänge noch auf dem Rohrbund zum Verlegen vorhanden ist bzw. welche Rohrlänge vom Rohrbund abgewickelt wurde. Darüber hinaus ist es bekannt, Kunststoffrohre für Flächentemperierungssysteme auf dem Rohrbund mit einer doppelten Signierung mit unterschiedlichen Längenangaben zu versehen. Ein 500m-Rohrbund wird beispielsweise in einem Abstand von 47 m von einem Rohrende mit der doppelten Längenangabe mit "453 m - 047 m" signiert. Eine derartige Doppelsignierung auf Kunststoffrohren für Flächentemperierungssysteme zeigt dann sowohl an, welche Rohrlänge sich noch auf dem Rohrbund befindet, als auch, welche Rohrlänge bereits vom Rohrbund abgewickelt wurde. So ist beispielsweise aus der DE 20 2009 016 478 U1 ein Kunststoffrohr für den Einbau in Erdbohrungen, beispielsweise für Erdwärmesonden, sowie zur anderweitigen Nutzung für den Rohrleitungs- und Brunnenbau, für Zisternen, oder zum Anschluss unterirdischer Speicher für Gase und Flüssigkeiten, für die Herstellung von Injektion (bei Erdwärmesonden, Ankerbohrungen, Bohrpfähle) oder dergleichen bekannt, wobei das Kunststoffrohr mit mindestens einer fortlaufenden abstandsweisen gegenläufigen Markierung entlang deren Längserstreckung mit einer Angabe zur Entfernung zu beiden Enden des Kunststoffrohres versehen ist.

In letzter Zeit werden am Markt Flächentemperierungssysteme vertrieben, in denen spiralförmig oder doppelspiralförmig mit einem rückseitig ein Element einer Klettverbindung aufweisenden Klebeband umwickelte Kunststoffrohre beim Verlegen des Flächentemperierungssystems auf einen formstabilen, flächigen Träger aufgebracht werden, auf dessen Oberseite das andere Element der Klettverbindung aufgebracht ist. Auf diese Weise können die Kunststoffrohre reversibel in beinahe beliebiger Geometrie auf dem formstabilen, flächigen Träger verlegt werden. Bei derartigen spiralförmig oder doppelspiralförmig mit Klebeband umwickelten Kunststoffrohren ist es jedoch möglich, dass die Längenangabe auf den Kunststoffrohren durch das Klebeband teilweise oder vollständig verdeckt ist und trotz der Verwendung eines relativ durchsichtigen Klebebandes nur teilweise oder nicht lesbar ist. Um die an einen Heizkreisverteiler angeschlossenen Rohre des Flächentemperierungssystems am Heizkreisverteiler einregulieren zu können, ist die Ermittlung der Kreislänge des verlegten Heizkreises erforderlich. Um ein gleichmäßiges Durchströmen der Heizkreise zu gewährleisten, ist es dazu notwendig, die Längenangaben zumindest an den beiden Enden der jeweiligen Heizkreise klar zu erkennen, auch bei den zum Teil schlechten Lichtverhältnissen auf der Baustelle.

An dieser Stelle setzt die vorliegende Erfindung ein, deren Aufgabe darin liegt, einen Rohrbund eines Kunststoffrohres, insbesondere zur Verwendung in einem Flächentemperierungssystem, sowie ein zumindest einen Abschnitt eines von einem solchen Rohrbund abgewickelten Kunststoffrohres umfassendes Flächentemperierungssystem zur Verfügung zu stellen, die die Nachteile des Stands der Technik überwinden. Insbesondere soll der erfindungsgemäße Rohrbund eines Kunststoffrohres gewährleisten, dass die Kreislänge des verlegten Heizkreises mit an einen Heizkreisverteiler angeschlossenen Rohren auch bei schlechten Lichtverhältnissen auf der Baustelle leicht und eindeutig ermittelt werden kann.

Diese und andere Aufgaben werden durch einen Rohrbund eines Kunststoffrohres mit den Merkmalen des Anspruchs 1 bzw. durch ein Flächentemperierungssystem mit den Merkmalen des Anspruchs 8 gelöst. Bevorzugte Ausführungsformen der erfindungsgemäßen Rohrbund eines Kunststoffrohres sind in den abhängigen Ansprüchen beschrieben.

Gemäß der vorliegenden Erfindung wurde erkannt, dass sich die Kreislänge eines verlegten Heizkreises mit an einen Heizkreisverteiler angeschlossenen Rohren auch bei schlechten Lichtverhältnissen auf der Baustelle leicht und eindeutig ermitteln lässt, wenn die Längenangabe für einen bestimmten Abstand eines zu einem Rohrbund aufgewickelten Kunststoffrohres an einer bestimmte Stelle entlang der Länge des Kunststoffrohres jeweils nicht nur einmal, sondern mehrfach derart auf die Außenseite des Rohres aufgebracht, insbesondere aufgedruckt ist, dass der Zahlenwert des Abstands mehrfach als gleichlautende Angabe genannt ist, wobei zwischen den einzelnen identischen Darstellungen einer Längenangabe ein ausreichender Abstand, in der Regel etwa 1 cm bis 10 cm vorhanden ist. Auf diese Weise ist gewährleistet, dass das spiralförmig oder doppelhelikal um die Außenseite des Rohres herum verlaufende Klebeband mit einem Element einer Klettverbindung zumindest eine der identischen Darstellung einer Längenangabe nicht überdeckt, während andere dieser identischen Darstellungen ganz oder teilweise aufgrund des Klebebandes nicht erkennbar sein können. In Ausnahmefällen können auch alle identischen Darstellungen einer Längenangabe teilweise vom Klebeband verdeckt sein. Dann kann aber in jedem Fall der durch die Längenangabe darzustellende Abstand der Rohrstelle von einem Rohrende aus den erkennbaren Bruchstücken der identischen Darstellungen leicht zusammengesetzt und damit ermittelt werden. Die identischen Angaben können dabei in Richtung der Rohrachse des Kunststoffrohres, senkrecht dazu oder gewinkelt dazu voneinander beabstandet sein. Durch zwei derartige Längenangabe an beiden Enden der Leitung eines Heizkreises lässt sich somit die Kreislänge des verlegten Heizkreises mit an einen Heizkreisverteiler angeschlossenen Rohren auch bei schlechten Lichtverhältnissen auf der Baustelle leicht und eindeutig ermitteln, so dass die an einen Heizkreisverteiler angeschlossenen Rohre des Flächentemperierungssystems einreguliert werden können und ein gleichmäßiges Durchströmen der Heizkreise gewährleistet ist.

Dementsprechend stellt die vorliegende Erfindung einen Rohrbund eines Kunststoffrohres , insbesondere zur Verwendung in einem Flächentemperierungssystem, mit einem ersten Ende des Kunststoffrohres und einem davon beabstandeten zweiten Ende des Kunststoffrohres zur Verfügung, wobei das Kunststoffrohr eine ein Lumen des Kunststoffrohres umgebende Rohrwandung, die zumindest teilweise aus polymerem Material aufgebaut ist, und eine auf die dem Lumen abgewandte Außenseite des Kunststoffrohres aufgebrachte Rohrsignierung umfasst, wobei die Rohrsignierung eine Längenangabe umfasst, die den Abstand der Stelle des Kunststoffrohres angibt, auf dem der jeweilige Abschnitt der Rohrsignierung aufgebracht ist, vom ersten Ende des Kunststoffrohres entfernt ist, wobei die Längenangabe jeweils in Form von mehreren voneinander beabstandeten gleichlautenden Angaben ausgebildet ist. Darüber hinaus liegt die vorliegende Erfindung in der Bereitstellung eines Flächentemperierungssystems, das mindestens einen Abschnitt eines von einem erfindungsgemäßen Rohrbund abgewickelten Kunststoffrohres zur Führung eines Wärmeträgermediums umfasst

Wie hierin verwendet bedeutet der Begriff "Abstand von einem Ende des Kunststoffrohres" der ungefährer Abstand eines Rohrendes zur jeweiligen Stelle entlang der Länge des Rohres, wobei die Ungenauigkeit der Längenangabe im Bereich von 0 cm bis etwa 15 cm liegen kann, insbesondere bis 5 cm oder bis zu 10 cm. Wie er hierin verwendet wird, bedeutet der Begriff "Kunststoffrohr" ein Vollkunststoffrohr oder ein Metall-Kunststoff-Verbundrohr. In Bezug auf das Kunststoffrohr des erfindungsgemäßen Rohrbunds wird der Begriff "flexibel" hierin so verwendet, dass das flexible Kunststoffrohr des erfindungsgemäßen Rohrbunds Biegeradien ermöglicht, die zur Verlegung eines Rohres für ein Flächentemperierungssystem erforderlich sind. Bevorzugt handelt es sich bei dem polymeren Material des Kunststoffrohrs des erfindungsgemäßen Rohrbundes um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Ein Kunststoffrohr aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material des Kunststoffrohrs des erfindungsgemäßen Rohrbunds eingesetzt. Gemäß der vorliegenden Erfindung erfolgt die Vernetzung zum vernetzten Polyethylen vorzugsweise wie in der DE 102 51 152 B4 beschrieben. Darüber hinaus kann das polymere Material des Kunststoffrohrs weiter einen Haftvermittler (vorzugsweise ein funktionalisiertes Polyolefin, insbesondere ein Maleinsäureanhydrid-gepfropftes LLDPE (lineares Polyethylen geringerer Dichte)) und/oder eine Diffusionssperrschicht, insbesondere aus Polyvinylakohol (PVA) oder EthylenVinylalkohol-Copolymer (EVOH) umfassen.

Erfindungsgemäß hat es sich in der Praxis als für das sichere Ablesen des Abstandes der Stelle von einem Rohrende als ausreichend erwiesen, wenn die Längenangabe jeweils in Form von zwei voneinander, beabstandeten gleichlautenden Angaben ausgebildet ist. Dies ist auch unter verfahrenstechnischen und wirtschaftlichen Gesichtspunkten bevorzugt.

Ebenso kann es sich als günstig erweisen, wenn zwischen den beiden voneinander beabstandeten, gleichlautenden Angaben eine Kennzeichnung angeordnet ist, die besonders bevorzugt als Strich ausgebildet ist, der senkrecht zur Rohrlängsachse verläuft. Eine derartige Kennzeichnung bietet eine Orientierungshilfe auch unter schlechten Lichtverhältnissen auf der Baustelle, anhand der der verlegende Handwerker leicht erkennen kann, dass in der unmittelbaren Umgebung dieser Kennzeichnung der Abstand der betreffende Rohrstelle von einem Ende des Kunststoffrohres ermittelt werden kann.

Es hat sich als vorteilhaft erwiesen, wenn die Kennzeichnung ungefähr mittig zwischen den beiden voneinander beabstandeten, gleichlautenden Angaben angeordnet ist. Dies ist für den Nutzen der Kennzeichnung als Orientierungshilfe besonders günstig.

Eine spiralförmige oder doppelhelikale Umwicklung des Kunststoffrohrs mit einem Klebeband hat sich in der Praxis unter dem Gesichtspunkt einer geringen Materialmenge bei hohem Anteil des Klebebandes, der zur Ausbildung einer Klettverbindung zur Fixierung des Kunststoffrohres an einem flächigen Träger zugänglich ist, als besonders günstig erwiesen. Um das Kunststoffrohr des erfindungsgemäßen Rohrbundes einer Klettverbindung zugänglich zu machen, ist das Klebstoffband auf seiner dem Kunststoffrohr abgewandten Seite mit einem ersten Element einer Klettverbindung versehen.

Hinsichtlich weiterer Details zum Kunststoffrohr, das zu einem erfindungsgemäßen Rohrbund aufgewickelt werden kann, insbesondere hinsichtlich Aufbau, Material und Herstellung wird auf die DE 20 2014 104 324 U1 verwiesen.

Hinsichtlich des erfindungsgemäßen Flächentemperierungssystems ist es bevorzugt, wenn es einen formstabilen, flächigen Träger umfasst, der bevorzugt als Hohlkammerprofil, als dünne, aufrollbare Kunststoffplatte (mit einer Dicke von ca. 3 mm), als Kunststofffolie oder als Dämmstoffplatte insbesondere aus Polymerschaum, insbesondere Polyurethan, ausgebildet sein kann. An einer Seite weist der formstabile, flächige Träger vorzugsweise eine Trägerfolie auf. An seiner der Trägerfolie abgewandten Seite kann der formstabile, flächige Träger mit einer Abdeckfolie versehen sein, die bevorzugt wasserabweisend ausgeführt sein kann. Dadurch kann effektiv verhindert werden, dass Leckagewasser oder Feuchtigkeit in den Boden des Raums gelangt. Die Trägerfolie ist mit dem formstabilen flächigen Träger vorzugsweise mittels eines Klebstoffes oder in anderer Weise verbunden, bevorzugt unlösbar daran befestigt. Die Trägerfolie ist bevorzugt flächig mit einem zweiten Element der Klettverbindung versehen, vorzugsweise ist einseitig die gesamte Fläche der Trägerfolie mit dem zweiten Element der Klettverbindung bedeckt. Die so gebildete flächige Element der Klettverbindung ermöglicht eine Rohrverlegung auf der gesamten Fläche der Trägerfolie in einem nahezu beliebigen Verlegemuster. Gemäß einer Ausführungsform der vorliegenden Erfindung wird ein Element der Klettverbindung durch Haken, Schlingen und/oder Fasern gebildet, die in ein Vlies, ein Gewirke, ein Veloursgewebe, ein Plüsch-, Frottee- oder sonstiges textiles Flächengebilde oder dergleichen des anderen Elements der Klettverbindung lösbar eingreifen können. Die Klettverbindung gewährleistet so eine lösbare Verbindung zwischen der Trägerfolie und dem vorzugsweise flexiblen Kunststoffrohr, durch die das vorzugsweise flexible Kunststoffrohr auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Vlies, das Gewirke, ein Veloursgewebe oder ein Plüsch-, Frottee- oder sonstiges textiles Flächengebilde gebildet wird. Umgekehrt ist auch möglich, dass das erste Element der Klettverbindung durch das Vlies, das Gewirke, das Veloursgewebe, das Plüsch-, Frottee- oder sonstiges textiles Flächengebilde gebildet wird, während das zweite Element der Klettverbindung die Haken, Schlingen und/oder Fasern umfasst. Gemäß der vorliegenden Erfindung ist der formstabile flächige Träger vorzugsweise so stabil ausgeführt, dass er für die Verlegung des vorzugsweise flexiblen Kunststoffrohrs als Bestandteil einer Fußbodenheizung geeignet ist. Dabei haben sich formstabile flächige Träger aus unterschiedlichen Materialien wie Holz, Kunststoffen, Styropor, Polyurethan oder geeigneten Verbundstoffen als geeignet erwiesen.

Vorzugsweise sind die Ränder des formstabilen flächigen Trägers mit Verbindungselementen versehen, so dass diese Verbindungselemente eine Verknüpfung zwischen zwei formstabilen flächigen Trägern ermöglichen. Insbesondere handelt es sich bei den Verbindungselementen um miteinander kooperierende Nut-und-Feder-Elemente.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, sind sie in den Figuren mit identischen Bezugszeichen gekennzeichnet. Erläuterungen zu derartigen Teilen oder Bauelementen werden nicht in zu jeder der folgenden Figuren wiederholt, sondern entsprechende Erläuterungen gelten in Bezug auf die anderen Figuren entsprechend. Es zeigen:

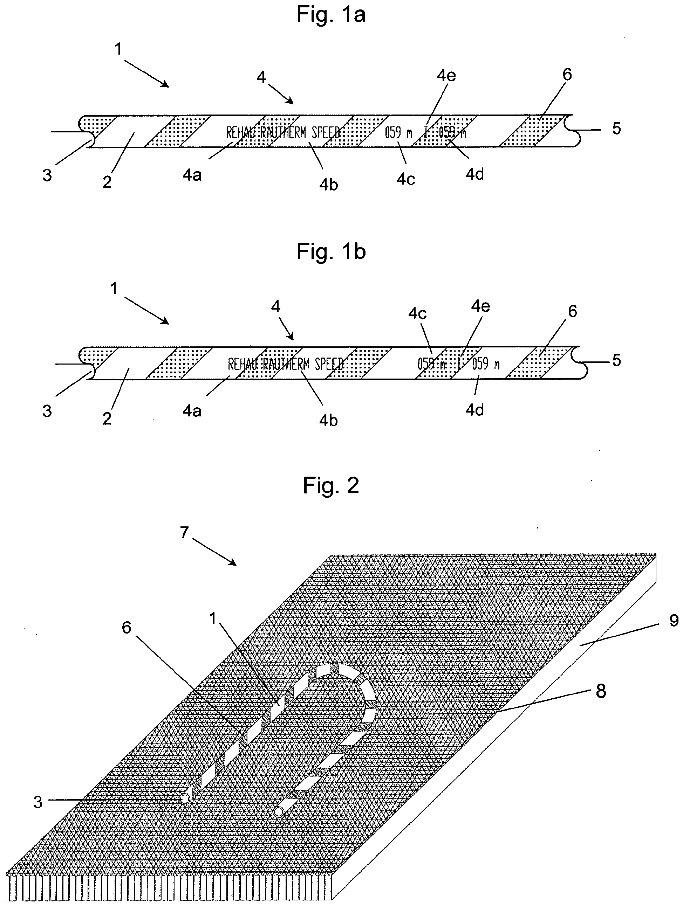

Fig. 1a eine Draufsicht auf einen Abschnitt eines Kunststoffrohres von einem Rohrbund gemäß einer Ausführungsform der vorliegenden Erfindung;
Fig. 1a eine Draufsicht auf einen Abschnitt eines Kunststoffrohres von einem Rohrbund gemäß einer weiteren Ausführungsform der vorliegenden Erfindung;
Fig. 2 eine perspektivische Ansicht eines Ausschnitts eines Flächentemperierungssystems gemäß einer Ausführungsform der vorliegenden Erfindung.

In Fig. 1a ist ein Ausschnitt aus einem vorzugsweise flexiblen Kunststoffrohr 1 von einem Rohrbund gemäß einer Ausführungsform der vorliegenden Erfindung in einer Draufsicht gezeigt. In der Praxis werden derartige Rohrbunde mit einer Länge des Kunstoffrohres von 500 m ausgeliefert. Das flexible Kunststoffrohr 1 auf dem erfindungsgemäßen Rohrbund besitzt ein erstes Ende und ein zweites Ende. Das vorzugsweise flexible Kunststoffrohr 1 umfasst eine ein Lumen 3 zur Führung eines Wärmeträgermediums umgebende Rohrwandung 2 aus zumindest teilweise polymerem Material. In der in Fig.1a dargestellten Ausführungsform der vorliegenden Erfindung ist die Rohrwandung 2 aus Peroxid-vernetztem Polyethylen (PE-Xa), um das herum in der angegeben Reihenfolge eine Haftvermittlerschicht und eine Diffusionssperrschicht angeordnet sind. Bevorzugt ist die Rohrwandung 2 sauerstoffdicht gemäß DIN 4726. Die Rohrwandung 2 wird vorzugsweise durch Coextrusion hergestellt.

Beginnend im Abstand von etwa einem Meter vom ersten Ende des flexiblen Kunststoffrohres 1 des erfindungsgemäßen Rohrbunds ist eine Rohrsignierung 4 in Längsrichtung des Kunststoffrohres 1 auf die Rohrwandung 2 aufgebracht, insbesondere aufgedruckt. Die Rohrsignierung 4 umfasst eine Firmenbezeichnung 4a der Herstellerfirma und eine Artikelbezeichnung 4b des Rohres. Darüber hinaus umfasst die Rohrsignierung des Weiteren eine Längenangabe 4c, 4d, die in der in Fig. 1a gezeigten Ausführungsform in Form von zwei voneinander beabstandeten, gleichlautenden Angaben 4c, 4d ausgebildet ist, die durch eine als Strich ausgebildete Kennzeichnung 4e getrennt sind. In der in Fig. 1a gezeigten Ausführungsform des erfindungsgemäßen Rohrbundes ist der Strich ungefähr senkrecht zu einer Rohrachse 5 ausgebildet und in etwa mittig zwischen den beiden gleichlautenden Angaben 4c, 4d angeordnet. Der Strich 4e weist an seinen beiden Enden jeweils in seine Erkennbarkeit verbessernde, ebenfalls strichförmige Basis auf.

Weitere derartige Rohrsignierungen 4 sind in Intervallen d von jeweils etwa einem Meter auf die Rohrwandung 2 aufgedruckt, wobei die Längenangaben 4c, 4d ganzzahlig ansteigend ausgebildet sind und den Abstand der Stelle der jeweilige Rohrsignierung 4 vom ersten Ende des Kunststoffrohres 1 des erfindungsgemäßen Rohrbundes in Metern angeben. Dabei ist die Position der als Strich ausgebildeten Kennzeichnung 4e so gewählt, dass diese Position dem Abstand der Stelle der jeweilige Rohrsignierung 4 vom ersten Ende des Kunststoffrohres 1 des erfindungsgemäßen Rohrbundes, der durch die Längenangaben 4c, 4d angegeben ist, entspricht. In der in Fig. 1a gezeigten Ausführungsform beträgt der Abstand der Stelle der gezeigten Rohrsignierung 4 vom ersten Ende des Kunststoffrohres 1 des erfindungsgemäßen Rohrbundes also 59 m.

Die Außenseite des Kunststoffrohres 1 des erfindungsgemäßen Rohrbundes bildet ein Klebstoffband 6, das in der in Fig. 1a dargestellten Ausführungsformform des Kunststoffrohres 1 spiralförmig um die Rohrwandung 2 gewickelt ist, so dass die Rohrwandung 2 vom Klebeband 6 teilweise ummantelt ist. Der spiralförmige Verlauf des Klebebands 6 entlang der Rohrwandung 2 ist in der der in Fig. 1a dargestellten Ausführungsform des Kunststoffrohres 1 derart, dass bei der Längenangabe "059 m" die in Fig. 1a rechte Angabe 4d der beiden identischen Angaben 4c, 4d, durch das Klebeband 6 insbesondere im Bereich der Zahlenangabe "059" verdeckt ist. Damit ist die die rechte Angabe 4d der beiden identischen Angaben 4c, 4d unter den teilweise schlechten Lichtbedingungen auf einer Baustelle für den das Kunststoffrohr 1 verlegenden Handwerker nur schwer zu erkennen, wenn überhaupt. Eine leichte Ermittlung der Länge des Heizkreises kann jedoch dennoch erfolgen, weil die in Fig. 1a linke Angabe 4c nicht durch das Klebeband 6 überdeckt und somit vom verlegenden Handwerker leicht erkennbar und ablesbar ist.

An der der Rohrwandung 2 abgewandten Seite des Klebebandes 6 befinden sich unregelmäßig über dessen gesamte Oberfläche verteilt Haken, die ein erstes Element einer Klettverbindung bilden. Alternativ oder zusätzlich kann dazu das erste Element der Klettverbindung auch als Schlingen, Fasern oder ähnliches ausgebildet sein. Ebenso kann das erste Element der Klettverbindung auch als Gewirke, Vlies, Veloursgewebe, Plüsch-, Frottee- oder sonstiges textiles Flächengebilde ausgebildet sein.

An der den Haken abgewandten Seite des Klebebandes 6 kann über die gesamte Fläche mittels einer Klebstoffverbindung eine weitere Schicht aus geschäumtem Polymermaterial, insbesondere aus geschäumten Polyethylen befestigt sein, die eine flexible elastische Ummantelung darstellt. Die flexible elastische Ummantelung ummantelt die Rohrwandung 2 somit ebenfalls in der Form einer Spirale. Die flexible elastische Ummantelung ist wiederum mit einer Klebstoffschicht versehen, durch die das Klebeband 6 an der Rohrwandung 2 haftet.

In Fig. 1b ist ein Ausschnitt aus einem vorzugsweise flexiblen Kunststoffrohr 1 von einem Rohrbund gemäß einer weiteren Ausführungsform der vorliegenden Erfindung in einer Draufsicht gezeigt. In dieser Ausführungsform überdeckt das Klebeband 6 teilweise die Zahlenangabe "059" der in Fig. 1b linken Angabe 4c der beiden identischen Angaben 4c, 4d. Dadurch wäre die linke Angabe 4c der beiden identischen Angaben 4c, 4d unter den teilweise schlechten Lichtbedingungen auf einer Baustelle für den das Kunststoffrohr 1 verlegenden Handwerker nur schwer zu erkennen. Eine leichte Ermittlung der Länge des Heizkreises kann jedoch dennoch erfolgen, weil die in Fig. 1b rechte Angabe 4d nicht durch das Klebeband 6 überdeckt und somit vom verlegenden Handwerker leicht erkennbar und ablesbar ist.

In Fig. 2 ist eine perspektivische Ansicht eines Ausschnitts eines Flächentemperierungssystems 7 gemäß einer Ausführungsform der vorliegenden Erfindung mit dem in Fig. 1a ausschnittsweise dargestellten, vorzugsweise flexiblen Kunststoffrohr aus einem erfindungsgemäßen Rohrbund gezeigt. Das vorzugsweise flexible Kunststoffrohr 1 ist in dem erfindungsgemäßen Flächentemperierungssystem 7 auf eine Trägerfolie 8 aufgebracht, die flächig auf den formstabilen flächigen Träger 9 aufgebracht ist. An ihrer dem vorzugsweise flexiblen Kunststoffrohr 1 zugewandten Seite umfasst die Trägerfolie 8 ein zweites Element der Klettverbindung, das als Gewirke ausgebildet ist, alternativ auch als Vlies, Veloursgewebe, Plüsch-, Frottee- oder sonstiges textiles Flächengebilde ausgebildet sein kann. Das flexible Kunststoffrohr 1 mit dem Klebeband 6, an dessen Außenseite sich das erste Element der Klettverbindung befindet, ist über das zweite Element lösbar unter Bildung der Klettverbindung an der Trägerfolie 8 fixiert.

An der dem flexiblen Kunststoffrohr 1 abgewandten Seite des zweiten Elements umfasst die Trägerfolie 8 einen vorzugsweise als Polyethylenfolie ausgebildeten Träger, der über eine Klebstoffschicht mit einer vorzugsweise ebenfalls als Polyethylenfolie ausgebildeten Schutzschicht verbunden ist. An der Unterseite der Schutzschicht befindet sich ein Papierträger, auf den eine Aluminiumfolie folgt. An der dem flexiblen Kunststoffrohr 1 abgewandten Seite der Trägerfolie 8 ist der formstabilen, flächigen Träger 9 angeordnet. Bei dem formstabilen, flächigen Träger 9 handelt es sich in der in Fig. 2 gezeigten Ausführungsform um eine Hohlkammerplatte 9 aus einem Kunststoffmaterial, die in der in Fig. 2 dargestellten Ausführungsform aus Polyethylen (PE), insbesondere Polyethylen hoher Dichte (HDPE) hergestellt ist. Alternativ können auch Polypropylen (PP), insbesondere statistisches Polypropylen (PP-R), oder Polyvinylchlorid (PVC), insbesondere Hart-PVC (PVC-U) zum Einsatz kommen. Die Dicke der Hohlkammerplatte 9 beträgt vorzugsweise 2,0 mm bis 4,0 mm, wobei die Dicke der Hohlkammerplatte 9 in der in Fig. 2 dargestellten Ausführungsform etwa 3,0 mm beträgt. Die lichte Weite der Hohlkammern der Hohlkammerplatte 9 liegt vorzugsweise in einem Bereich von 1,5 mm bis 4,5 mm, wobei die Hohlkammern der Hohlkammerplatte 9 in der in Fig. 2 dargestellten Ausführungsform eine lichte Weite von etwa 2,0 mm aufweisen. Die Stege, die die Hohlkammern der Hohlkammerplatte 9 umgeben, weisen bevorzugt eine Wandstärke auf, die im Bereich von 0,50 mm bis 2,0 mm liegt, wobei die Stege der Hohlkammerplatte 9 in der in Fig. 2 dargestellten Ausführungsform eine Wandstärke von etwa 0,60 mm aufweisen. Die Gesamtbreite der Hohlkammerplatte 9 beträgt vorzugsweise 0,50 m bis 2,0 m, wobei die Hohlkammerplatte 9 in der in Fig. 2 dargestellten Ausführungsform etwa 1,0 m breit ist. Die Hohlkammern der Hohlkammerplatte 9 sind dabei quer zur Längsrichtung der Platte 9 ausgerichtet.

Die Hohlkammerplatte 9 des erfindungsgemäßen Flächentemperierungssystems 7 ist vorzugsweise faltbar und/oder aufrollbar ausgebildet. Hierzu können die Stege einiger Hohlkammern der Hohlkammerplatte 9 an der der Trägerfolie 8 gegenüberliegenden Seite der Hohlkammerplatte 9 nicht vorhanden oder durchtrennt sein, wobei sich eine Durchtrennung vorzugsweise über die gesamte Breite der Hohlkammerplatte 9 erstreckt. Eine derartiges Fehlen oder eine derartige Durchtrennung der Stege kann in Längsrichtung der Hohlkammerplatte 9 gesehen in gleichen Abständen oder mit unterschiedlichen Abständen erfolgen.

Auf die der Trägerfolie 8 abgewandten Seite des formstabilen, flächigen Trägers 9 kann eine Abdeckfolie aufgebracht sein, die bevorzugt aus einer vorzugsweise als einer Aluminiumfolie ausgebildeten Metallschicht, einem Papierträger und einer vorzugsweise als Polyethylenfolie ausgebildeten Schutzschicht aufgebaut ist, durch die die Abdeckfolie wasserabweisend ausgeführt ist. Dadurch kann effektiv verhindert werden, dass Leckagewasser oder Feuchtigkeit in den Boden des Raums gelangt.

In anderen Ausführungsformen des erfindungsgemäßen Flächentemoperierungssystems kann der formstabile, flächige Träger 9 auch als dünne, aufrollbare Kunststoffplatte (bevorzugt mit einer Dicke von ca. 3 mm), als Kunststofffolie oder als Dämmstoffplatte insbesondere aus Polymerschaum ausgebildet sein.

Bei seiner Verlegung wird das flexible Kunststoffrohr 1 auf die Trägerfolie 8 aufgelegt, so dass das vorzugsweise flexible Kunststoffrohr 1 zunächst nur im Scheitelbereich punktuell auf der Trägerfolie 8 aufliegt. Wird nun auf das vorzugsweise flexible Kunststoffrohr 1 von oben ein Druck ausgeübt, gibt die Hohlkammerplatte 9 an den mit Druck beaufschlagten Stellen nach und bietet dem vorzugsweise flexiblen Kunststoffrohr 1 dadurch eine vergrößerte Oberfläche zur Ausbildung der Klettverbindung. Damit liegt das erste Element der Klettverbindung nun eher flächig auf dem zweiten Element auf der Trägerfolie 8 auf, so dass aufgrund der vergrößerten Auflagefläche eine stärkere Klettverbindung ausgebildet wird.

Zum Verlegen eines als Fußbodenheizung ausgebildeten erfindungsgemäßen Flächentemperierungselements 7 wird der mit der Trägerfolie 8 und ggf. der Abdeckfolie versehene formstabile, flächige Träger 9 zunächst auf dem Boden vollflächig ggf. nach vorherigem Zuschneiden ausgelegt. Daraufhin wird das vorzugsweise flexible Kunststoffrohr 1 im gewünschten Muster auf der Trägerfolie 8 verlegt und angedrückt, so dass eine Klettverbindung mit vergrößerter Auflagefläche ausgebildet wird. Zur Korrektur des Verlegemusters kann die reversibel ausgebildete Klettverbindung durch Anheben des vorzugsweise flexiblen Kunststoffrohrs 1 vom formstabilen, flächigen Träger 9 gelöst werden, wonach dieses erneut verlegt werden kann. Abschließend wird die Anordnung mit Estrich vergossen.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den beiliegenden Ansprüchen ergibt.

## Patentansprüche

1. Rohrbund eines Kunststoffrohres (1), insbesondere zur Verwendung in einem Flächentemperierungssystem (7), mit einem ersten Ende des Kunststoffrohres (1) und einem davon beabstandeten zweiten Ende des Kunststoffrohres (1), wobei das Kunststoffrohr (1) eine ein Lumen (3) des Kunststoffrohres (1) umgebende Rohrwandung (2), die zumindest teilweise aus polymerem Material aufgebaut ist, und eine auf der dem Lumen (3) abgewandte Außenseite des Kunststoffrohres (1) aufgebrachte Rohrsignierung (4) umfasst, wobei die Rohrsignierung (4) eine Längenangabe (4c, 4d) umfasst, die den Abstand vom ersten Ende des Kunststoffrohres (1) bis zu der Stelle des Kunststoffrohres (1) angibt, auf dem der jeweilige Abschnitt der Rohrsignierung (4) aufgebracht ist,
**dadurch gekennzeichnet, dass**
die Längenangabe (4c, 4d) jeweils in Form von mehreren voneinander beabstandeten gleichlautenden Angaben (4c, 4d) ausgebildet ist.

2. Rohrbund eines Kunststoffrohres (1) nach Anspruch 1, **dadurch gekennzeichnet, dass** die Längenangabe (4c, 4d) jeweils in Form von zwei voneinander, beabstandeten gleichlautenden Angaben (4c, 4d) ausgebildet ist.

3. Rohrbund eines Kunststoffrohres (1) nach Anspruch 2, **dadurch gekennzeichnet, dass** zwischen den beiden voneinander beabstandeten, gleichlautenden Angaben (4c, 4d) eine Kennzeichnung (4e) angeordnet ist.

4. Rohrbund eines Kunststoffrohres (1) nach Anspruch 3, **dadurch gekennzeichnet, dass** die Kennzeichnung (4e) als Strich (4e) ausgebildet ist, der senkrecht zur Rohrlängsachse (5) verläuft.

5. Rohrbund eines Kunststoffrohres (1) nach Anspruch 3 oder Anspruch 4, **dadurch gekennzeichnet, dass** die Kennzeichnung (4e) ungefähr mittig zwischen den beiden voneinander beabstandeten, gleichlautenden Angaben (4c, 4d) angeordnet ist.

6. Rohrbund eines Kunststoffrohres (1) nach einem der vorhergehenden Ansprüche, **dadurch gekennzeichnet, dass** das Kunststoffrohr (1) spiralförmig oder doppelhelikal mit einem Klebeband (6) umwickelt ist.

7. Rohrbund eines Kunststoffrohres (1) nach Anspruch 6, **dadurch gekennzeichnet, dass** das Klebeband (6) auf seiner dem Kunststoffrohr (1) abgewandten Seite ein erstes Element einer Klettverbindung aufweist.

8. Flächentemperierungssystem (7), umfassend mindestens einen Abschnitt eines von einem Rohrbund nach einem der Ansprüche 1 bis 7 abgewickelten Kunststoffrohres (1) zur Führung eines Wärmeträgermediums.

## Claims

1. A pipe coil of a plastic pipe (1), in particular for use in a surface temperature control system (7), comprising a first end of the plastic pipe (1) and a second end of the plastic pipe (1) spaced apart therefrom, wherein the plastic pipe (1) comprises a pipe wall (2) surrounding a lumen (3) of the plastic pipe (1), said pipe wall (2) being constructed at least partially of polymeric material, and a pipe marking (4), which is applied to the outside of the plastic pipe (1) facing away from the lumen (3), wherein the pipe marking (4) comprises a length indication (4c, 4d), which indicates the distance of the point of the plastic pipe (1) to which the particular segment of the pipe marking (4) is applied from the first end of the plastic pipe (1),
**characterised in that**
the length indication (4c, 4d) is configured in each case in the form of multiple identical indications (4c, 4d) that are spaced apart from each other.

2. The pipe coil of a plastic pipe (1) according to claim 1, **characterised in that** the length indication (4c, 4d) is configured in each case in the form of two identical indications (4c, 4d) that are spaced apart from each other.

3. The pipe coil of a plastic pipe (1) according to claim 2, **characterised in that** a mark (4e) is arranged between the two identical indications (4c, 4d) that are spaced apart from each other.

4. The pipe coil of a plastic pipe (1) according to claim 3, **characterised in that** the mark (4e) is configured as a line (4e) running perpendicular to the pipe's longitudinal axis (5).

5. The pipe coil of a plastic pipe (1) according to claim 3 or claim 4, **characterised in that** the mark (4e) is arranged approximately centrally between the two identical indications (4c, 4d) that are spaced apart from each other.

6. The pipe coil of a plastic pipe (1) according to one of the preceding claims, **characterised in that** the plastic pipe (1) is wrapped spirally or in the manner of a double helix with an adhesive tape (6).

7. The pipe coil of a plastic pipe (1) according to claim 6, **characterised in that** the adhesive tape (6) comprises a first element of a hook-and-loop fastening on its side facing away from the plastic pipe (1).

8. A surface temperature control system (7), comprising at least one segment of a plastic pipe (1) uncoiled from a pipe coil according to one of claims 1 to 7 for conveying a heat transfer medium.

## Revendications

1. Collet tubulaire d'un tuyau en matière plastique (1), en particulier destiné à être utilisé dans un système de thermorégulation de surfaces (7), avec une première extrémité du tuyau en matière plastique (1) et une seconde extrémité espacée de celle-ci du tuyau en matière plastique (1), dans lequel le tuyau en matière plastique (1) comprend une paroi de tuyau (2) entourant un lumen (3) du tuyau en matière plastique (1), qui est élaborée au moins en partie à partir d'un matériau polymère, et une étiquette d'identification de tuyau (4) appliquée sur le côté extérieur, opposé au lumen (3), du tuyau en matière plastique (1), dans lequel l'étiquette d'identification de tuyau (4) comprend une indication de longueur (4c, 4d), qui indique la distance depuis la première extrémité du tuyau en matière plastique (1) jusqu'à l'emplacement du tuyau en matière plastique (1), sur lequel la section respective de l'étiquette d'identification de tuyau (4) est appliquée,
**caractérisé en ce que**
l'indication de longueur (4c, 4d) est réalisée respectivement sous la forme de plusieurs indications (4c, 4d) identiques espacées les unes des autres.

2. Collet tubulaire d'un tuyau en matière plastique (1) selon la revendication 2, **caractérisé en ce que** l'indication de longueur (4c, 4d) est réalisée respectivement sous la forme de deux indications (4c, 4d) identiques espacées l'une de l'autre.

3. Collet tubulaire d'un tuyau en matière plastique (1) selon la revendication 2, **caractérisé en ce qu'**un marquage (4e) est disposé entre les deux indications (4c, 4d) identiques espacées l'une de l'autre.

4. Collet tubulaire d'un tuyau en matière plastique (1) selon la revendication 3, **caractérisé en ce que** le marquage (4e) est réalisé sous la forme d'un trait (4e), qui s'étend de manière perpendiculaire par rapport à l'axe longitudinal de tuyau (5).

5. Collet tubulaire d'un tuyau en matière plastique (1) selon la revendication 3 ou la revendication 4, **caractérisé en ce que** le marquage (4e) est disposé approximativement au centre entre les deux indications (4c, 4d) identiques espacées l'une de l'autre.

6. Collet tubulaire d'un tuyau en matière plastique (1) selon l'une quelconque des revendications précédentes, **caractérisé en ce que** le tuyau en matière plastique (1) est enroulé en forme de spirale ou en hélice double avec un ruban adhésif (6).

7. Collet tubulaire d'un tuyau en matière plastique (1) selon la revendication 6, **caractérisé en ce que** le ruban adhésif (6) présente sur son côté opposé au tuyau en matière plastique (1) un premier élément d'un système de liaison agrippante.

8. Système de thermorégulation de surfaces (7) comprenant au moins une section d'un tuyau en matière plastique (1) déroulé d'un collet tubulaire selon l'une quelconque des revendications 1 à 7, servant à guider un milieu caloporteur.
